# FASCICULE DE BREVET EUROPEEN

(11) **EP 1 694 525 B1**
(45) Date de publication et mention de la délivrance du brevet: **02.05.2007**
(21) Numéro de dépôt: 04805471.2
(22) Date de dépôt: 17.11.2004
(51) Int. Cl.: B60M 1/34, B60L 5/40

(54) **DISPOSITIF DE GUIDAGE ET D'ALIMENTATION ELECTRIQUE AU SOL D'UN VEHICULE PAR UNE GOULOTTE**
VORRICHTUNG ZUR FÜHRUNG UND ELEKTRISCHEN ENERGIEVERSORGUNG EINES FAHRZEUGS DURCH EINE RINNE IM BODEN
DEVICE FOR GUIDING AND SUPPLYING ELECTRICAL POWER TO A VEHICLE BY A TROUGH IN THE GROUND

(30) Priorité: 18.12.2003 FR 0314905
(43) Date de publication de la demande: 30.08.2006
(73) Titulaire: Laridant, Hubert, 62380 Affringues (FR)
(72) Inventeur: Laridant, Hubert, 62380 Affringues (FR)
(74) Mandataire: Hennion, Jean-Claude
(86) Numéro de dépôt international: PCT/FR2004/002934
(87) Numéro de publication internationale: WO 2005/068246

(56) Documents cités:
- WO-A-94/10020
- DE-C- 105 966
- FR-A- 2 613 305
- US-A- 1 385 100
- PATENT ABSTRACTS OF JAPAN vol. 1996, no. 11, 29 novembre 1996 (1996-11-29) & JP 08 186904 A (ISHIKAWAJIMA HARIMA HEAVY IND CO LTD), 16 juillet 1996 (1996-07-16)

## Description

La présente invention concerne un dispositif de guidage et d'alimentation électrique au sol pour véhicules.

L'invention concerne notamment les systèmes de transport automatiques ou non de personnes.

En tant que concept, les systèmes de transport automatique de personnes sont connus depuis une trentaine d'années (APM Automatic People Mover, AGT Automated Guideway Transit, SLT Shuttle Loop Transit, PRT Personal Rapid Transit, VAL Villeneuve d'Ascq Lille devenu Véhicule Automatique Léger, Poma 2000 de Laon, Otis Métro Shuttle 6000, Sky Train de Vancouver, Docklands Light Railway de Londres, Metromover de Miami, NTS d'Osaka).

Diverses techniques de propulsion ont été employées ou envisagées : autopropulsion par moteur électrique, moteur à induction, traction par câble (Poma 2000 de Laon, Monorail suspendu Siemens à Dortmund, Doppelmayr cable car).

Plus de cinquante aéroports dans le monde sont pourvus de systèmes de transport de type APM (Kualo Lumpur, Las Vegas, Seattle/Tacoma, Miami, Singapour/Changi, Denver, Newark/New jersey, Londres/Gatwick, Francfort...).

La diversité des solutions techniques en termes de propulsion, de suspension, et la relative rareté des APM, à comparaison des moyens de transports traditionnels tels que métro, sont des signes qui reflètent bien la complexité technique des solutions économiquement viables pour les APM.

A titre d'illustration, le système SK6000 de la société Soulé, d'un APM à traction par câble, prévu pour l'aéroport Charles de Gaulle (FR) a récemment dû être abandonné après plusieurs années de travaux de mise au point.

La fiabilité de tels systèmes de transport doit en effet être très élevée, de l'ordre de 99,5 % et plus, en particulier lorsqu'ils sont prévus pour le transport de passagers dans un aéroport, les exploitants des APM pouvant être contraints de payer des pénalités extrêmement élevées lors de pannes empêchant les passagers de l'APM de prendre leur avion.

Les vitesses de déplacement de ces APM doivent par ailleurs être élevées, y compris sur des réseaux pourvus de nombreux virages du fait des nombreux bâtiments existants le plus souvent avant le tracé des voies.

Les véhicules routiers à propulsion électrique de transport de personnes sont classiquement alimentés au moyen de câbles aériens conducteurs dits caténaires disposés au dessus des pistes de circulation des véhicules.

On connaît depuis le début des années 80 des tramway sur pneus, véhicules destinés à combler la différence entre les capacités du bus articulé (2000 voyageurs par heure et par sens) et le tramway (de 3000 à 4000 voyageurs par heure et par sens). Pour ces tramways sur pneus, l'alimentation est effectuée conventionnellement par ligne aérienne de contact unifilaire ou caténaire (voir GLT Guided Light Transit de la société belge BN, Groupe Bombardier, installé à Rochefort en BELGIQUE, ou le TVR Transport sur Voie Réservée, de Caen, ou bien encore le système installé à Nancy). Les tramways sur pneus sont guidés par un rail central encastré au centre de la voie, posé sur une semelle antivibratoire et insonorisante.

Le tramway sur pneus peut fonctionner suivant quatre modes différents :
- guidé-électrifié (mode tramway) : l'énergie est captée par pantographe et le retour de courant se fait par le rail de guidage (sauf par exemple pour le système de Nancy utilisant une ligne bifilaire de trolley bus) ;
- routier-électrifié : le tramway n'est pas guidé par le rail mais roule sur chaussée ;
- guidé-diesel ;
- routier-diesel (mode bus).

Le passage du mode routier au mode guidé est effectué à l'aide d'un mécanisme dénommé entennoir. Dans le système TVR de Bombardier, chaque essieu est guidé par un mini bogie constitué de deux galets disposés dans l'axe du véhicule, un à l'avant et l'autre à l'arrière, les galets exerçant sur le rail de guidage un poids de 750 kg.

Dans le système Translhor de la société Lohr Industrie, les galets sont regroupés par paires et s'appuient en V de part et d'autre du rail de guidage (voir EP 0.833.759 ou FR 2.735.728).

Les systèmes actuels de guidage par rail de tramway sur roues présentent de nombreux inconvénients.

Les oscillations des galets de guidage dans le rail provoquent des frottements sur le rail, d'où une usure du rail, avec risque de déraillement et bruits élevés au fonctionnement. Des déraillements ont été signalés à Nancy et Caen.

Une expertise sur la sécurité du système de guidage du transport sur voie réservée (TVR) de Nancy et Caen a fait l'objet d'un rapport du Conseil Général des Ponts et Chaussées, publié en avril 2003.

Ce rapport mentionne entre autres :
- pour le système de Caen, une usure du rail par électro-érosion liée au retour de courant par le rail, usure provoquant un bruit incommodant les riverains ;
- sept pertes de guidage depuis la remise en service en mars 2002, la pression exercée par le galet empêchant alors au conducteur de diriger le véhicule, un freinage restant toutefois possible ;
- des ruptures de galet et insertion manquée du galet sur le rail sans déclenchement d'alarme.

Ce rapport conclut que les risques d'accidents à venir ne sont pas exclus et que la sécurité des TVR nécessite une politique d'entretien préventif et de renouvellement couvrant le rail, la piste de roulement des pneus et le galet. A titre indicatif, le rechargement et le meulage du rail de guidage du TVR de Nancy entraîne des frais annuels de l'ordre de 200.000 € HT.

Pour les tramways sur pneus, les trolley-bus, on cherche actuellement à supprimer les lignes aériennes électrifiées et on se propose de combiner le guidage et l'alimentation électrique du véhicule routier, par exemple un trolley-bus, au moyen d'une piste conductrice, matérialisée par exemple sous la forme d'un rail, rapportée sur la chaussée ou noyée dans celle-ci.

Néanmoins, cette conception se heurte à d'évidents problèmes de sécurité. Tout risque de contact volontaire ou accidentel entre un usager ou toute autre personne et le ou les conducteurs électriques d'alimentation doit impérativement être exclu.

Le document FR 2.613.305 décrit un rail de guidage et d'alimentation électrique, placé dans un caniveau ménagé dans le sol. Dans ce montage antérieur un galet pénètre au jeu fonctionnel pris dans un passage longitudinal du rail, passage délimité par deux fers en U.

Ces deux fers en U à ouverture tournée vers le bas reposent sur des cloisons transversales métalliques, disposées de place en place dans une tranchée ménagée dans un sol en béton.

Dans le fond de cette tranchée, des longerons sont ancrés, les cloisons transversales étant soudées sur ces longerons. Les cloisons transversales sont en forme de U et supportent des longrines en cornière, soudées. Des conducteurs électriques sont placés sur des supports verticaux, posés sur les longrines en cornière. Ces conducteurs fournissent par frottement l'énergie nécessaire au déplacement d'un chariot de manutention.

En variante, le chariot sera entraîné par une chaîne sans fin, logée dans la tranchée du rail de guidage, le chariot étant alors pourvu de deux bras pénétrant dans le rail de guidage : un portant les contacts électriques et un pour l'entraînement par chaîne.

Le dispositif décrit dans le document FR 2.613.305 concerne les chariots de manutention et s'avère inadapté pour résoudre les problèmes techniques mentionnés auparavant pour les TVR et APM.

Les dispositifs actuels de guidage par rail central présentent les autres inconvénients suivants :
- une faible tolérance de défaut d'alignement du véhicule avec son guide, souvent limité au jeu de fonctionnement et se traduisant par une détérioration voir un accident en cas de dérapage, sur ou sous virage du véhicule ;
- une protection contre les chocs électriques par joints souples pouvant se détériorer ou par système de commutation pouvant défaillir ;
- une sensibilité aux eaux de ruissellement ;
- une mise en oeuvre complexe voire irréalisable d'aiguillages ou de croisements.

Le dispositif selon la présente invention permet de remédier à ces divers inconvénients.

Le dispositif selon l'invention peut être présenté de la manière générale suivante.

Il comporte une goulotte noyée dans le sol, fermée par deux couvercles partiels laissant une ouverture médiane. Deux profilés disposés de chaque coté de cette ouverture la réduisent à une fente étroite débouchant au niveau du sol. Des chariots guidés verticalement et horizontalement par des galets à boudin central coopérant avec les profilés, coulissent au travers de la fente. Chaque chariot est relié au véhicule qu'il guide au moyen d'un timon, ce timon étant à liaison rotule coté véhicule et ce timon étant relié au chariot par un axe horizontal d'une chape elle-même reliée au chariot par un axe vertical.

Le véhicule peut ainsi se déplacer transversalement par rapport à la goulotte dans la limite de la longueur du timon. Un capteur placé sur l'axe vertical de la chape permet de mesurer les variations de l'angle que fait le timon avec le chariot dans le plan horizontal, donc avec la fente de la goulotte. Le traitement de cette information par une commande électrique permet de diriger le véhicule selon l'axe de la fente de la goulotte, l'angle devant alors être toujours sensiblement nul. Un dérapage, un sur ou un sous virage du véhicule seront détectés par le capteur sous la forme d'un angle anormalement élevé et cette information pourra être traitée pour donner une alarme, ralentir ou arrêter le véhicule. Un ordre pourra être donné à la commande pour que l'angle ait une certaine valeur, ceci se traduisant par un déplacement latéral du véhicule.

L'alimentation en énergie électrique des véhicules est assurée par un ou des capteurs de courant glissants fixés à chaque chariot et qui coopèrent avec un ou des rails conducteurs disposés sur la face inférieure des couvercles partiels, donc hors d'atteinte de toute personne.

Eventuellement, les profilés bordant la fente de goulotte peuvent être utilisés comme conducteur de protection ou de retour de courant.

Le fond de la goulotte est pourvu de puisards, au minimum aux points bas, permettant la récupération et l'évacuation des eaux de ruissellement pouvant s'introduire par la fente.

La réalisation d'aiguillages est obtenue par une bifurcation de la goulotte, le ou les rails conducteurs étant interrompus à ce niveau. Une conformation en biseau des extrémités des rails conducteurs facilite le réengagement du ou des capteurs de courant glissants après le franchissement de l'aiguillage. Une largeur des galets égale à trois fois la largeur de la fente empêche le déraillement des chariots à l'approche du coeur de l'aiguillage là où la largeur de la fente est double. Pour que les chariots s'engagent dans la bonne direction, il suffit à l'approche de l'aiguillage de donner l'ordre à la commande de désaxer le véhicule par rapport à la goulotte du coté où l'on veut s'engager. La traction exercée par le timon formant un angle avec le chariot, va engager naturellement celui-ci dans la bonne direction. Cet ordre peut être donné par le conducteur du véhicule ou automatiquement.

Des témoins fixés à l'intérieur de la goulotte, en coopération avec un détecteur fixé sur le chariot, peuvent indiquer au système de commande du véhicule l'approche d'un aiguillage, d'un arrêt. De même un témoin fixé sur le chariot en coopération avec des détecteurs fixés à l'intérieur de boîtiers encastrés au sol contre la goulotte, peut indiquer l'approche du véhicule pour déclencher par exemple la commande de feux tricolores. L'utilisation et la combinaison de séries de témoins de largeurs différentes permettent d'effectuer un codage.

Le système peut être également équipé d'un bras de relevage pivotant motorisé fixé sur le véhicule au niveau de la rotule. Lorsque le chariot est engagé dans la goulotte, le bras est au repos à l'opposé du timon. La goulotte étant aménagée en un point donné à cet effet, la rotation du bras vient engager une fourche fixée sur le bras autour du timon qui est ainsi soulevé. Le dessus du chariot venant naturellement se plaquer sur le timon, une deuxième fourche fixée sur le dessus du chariot permet d'immobiliser celui-ci en position repos pour éviter sa rotation autour de l'axe vertical de la chape. Des ressorts de rappel peuvent être éventuellement prévus sur les axes de la chape pour aider au positionnement du chariot avec le timon.

L'invention se rapporte, selon un premier aspect, à une goulotte de guidage et d'alimentation électrique d'un véhicule à galet, selon la revendication 1. La goulotte enterrée logeant au moins un rail conducteur comprenant deux profilés, en regard délimitant une fente supérieure, ces profilés formant surface de roulement pour un premier galet de véhicule et définissant une seconde surface de roulement pour un deuxième galet de véhicule, cette seconde surface étant interne à la goulotte et tournée vers sa paroi de fond.

Selon diverses réalisations, la goulotte présente les caractéristiques suivantes, le cas échéant combinées :
- elle comprend deux rails conducteurs supportés par des demi-couvercles formant gaine isolante, la face inférieure des rails conducteurs étant non isolée et tournée vers la paroi de fond de goulotte ;
- les demi-couvercles et la paroi de fond sont en matériau polymère ;
- les profilés délimitent une fente d'une largeur maximum d'environ deux centimètres et d'une hauteur minimum d'environ quinze centimètres ;
- les profilés sont de section en U et sont encastrés dans un liant hydraulique.

Selon un deuxième aspect, l'invention se rapporte à un dispositif de guidage et d'alimentation électrique au sol d'un véhicule par une goulotte telle que présentée ci-dessus, ce dispositif comprenant un chariot portant au moins deux galets à boudin central venant s'insérer dans la fente en appui sur respectivement la première et la seconde surface de roulement définies par la goulotte.

Selon diverses réalisations, le dispositif présente les caractéristiques suivantes, le cas échéant combinées :
- le chariot est en forme de cadre et comporte un longeron inférieur supportant des capteurs de courant glissants coopérant avec les rails conducteurs de la goulotte ;
- le chariot comporte deux longerons et deux traverses, quatre galets étant disposés entre les traverses ;
- le chariot est apte à être attelé coté véhicule par une liaison rotule, un timon reliant cette rotule à un axe horizontal d'une chape du chariot, cette chape étant reliée par un axe vertical à un longeron supérieur du chariot ;
- un capteur d'angle est placé sur l'axe vertical de la chape pour mesurer l'angle que fait le timon avec l'axe de la fente de la goulotte ;
- la largeur des galets est au moins égale à trois fois la largeur de la fente de la goulotte ;
- une botte de raccordement permet la connexion électrique du véhicule sur lequel est attelé le chariot, les capteurs de courant glissants étant reliés à la boîte de raccordement par des conducteurs logés dans l'ossature en profilés du chariot.

Selon un troisième aspect, l'invention se rapporte à un véhicule de transport urbain, notamment tramway sur pneu ou APM, pourvu d'un dispositif de guidage et d'alimentation électrique tel que présenté ci-dessus, comprenant un bras de relevage motorisé du timon.

Selon un quatrième aspect, l'invention se rapporte à un réseau de guidage et d'alimentation électrique de véhicule à galets, comprenant des goulottes telles que présentées ci-dessus, des témoins pour détecteurs inductifs étant logés dans les goulottes et/ou des détecteurs inductifs étant fixés à l'intérieur de boîtiers encastrés contre les goulottes.

Dans une réalisation, le réseau comporte au moins un aiguillage dans lequel le ou les rails conducteurs sont interrompus, les extrémités de ces rails conducteurs étant conformées en biseau.

Selon un cinquième aspect, l'invention se rapporte à un procédé de commande du déplacement d'un véhicule à galet, ce véhicule étant pourvu d'un dispositif tel que présenté ci-dessus, le procédé comprenant une mesure de l'angle fait par le timon avec le chariot, une détection d'une valeur de cet angle supérieure à un seuil déclenchant une alarme et/ou un ralentissement ou un arrêt du véhicule.

Dans une réalisation, le procédé comprend une étape de commande de désaxer le véhicule par rapport au chariot, à l'approche d'un aiguillage.

Dans une réalisation, le procédé comprend une étape de détection de l'approche du véhicule d'une zone définie du réseau, des témoins et détecteurs internes à la goulotte coopérant à cette fin respectivement avec des détecteurs et témoins placés sur le chariot.

Les dessins annexés illustrent l'invention :
- la figure 1 est une vue en coupe transversale de la goulotte avec un chariot partiellement représenté ;
- la figure 2 est une vue latérale d'un chariot avec son système d'attelage ;
- la figure 3 représente schématiquement un aiguillage vu de dessus ;
- la figure 4 est une vue selon le plan IV-IV de la figure 3 ;
- la figure 5 est une vue en coupe transversale d'une goulotte pourvue de détecteurs et témoins, un chariot étant partiellement représenté ;
- la figure 6 représente un attelage équipé d'un système de relevage avec un chariot en position relevé.

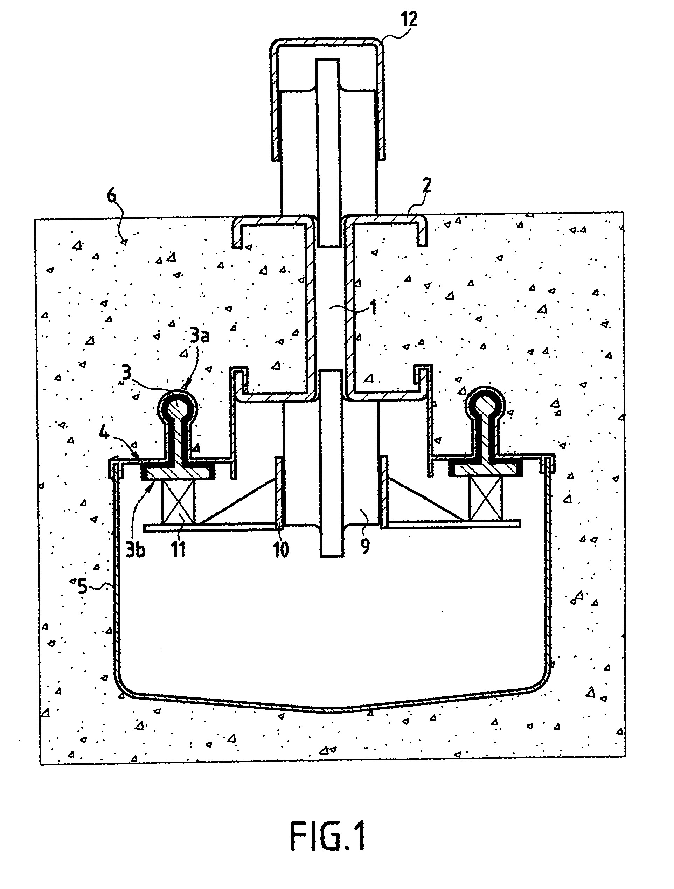

En référence à ces dessins, le dispositif comprend une goulotte noyée dans le sol (figure 1), comportant :
- en partie supérieure une fente 1 délimitée par des profilés 2 en acier ;
- deux rails conducteurs 3 en profilé aluminium isolés par une gaine PVC 3a sauf sur leur face inférieure 3b;
- deux demi couvercles 4 en PVC supportant les rails conducteurs 3 et assurant l'assemblage entre les profilés 2 et le fond 5 de la goulotte en PVC.

Les dimensions de la fente 1, d'une largeur maximum d'environ deux centimètres et d'une quinzaine de centimètres au minimum de hauteur, en coopération avec la géométrie des demi couvercles 4 et le positionnement en sous face de ceux-ci des rails conducteurs 3 mettent ces rails 3 hors d'atteinte et assure ainsi la protection contre les chocs électriques par contact direct.

L'emploi de demi- couvercles 4 en PVC pour supporter les rails conducteurs 3, assure une protection supplémentaire en cas de détérioration de l'isolant 3a.

Le fond 5 de la goulotte, pourvu de puisards (non représentés) au minimum aux points bas, permet la récupération et l'évacuation des eaux de ruissellement pouvant s'introduire par la fente 1.

La cohésion et la résistance mécanique de l'ensemble sont assurées par un béton 6.

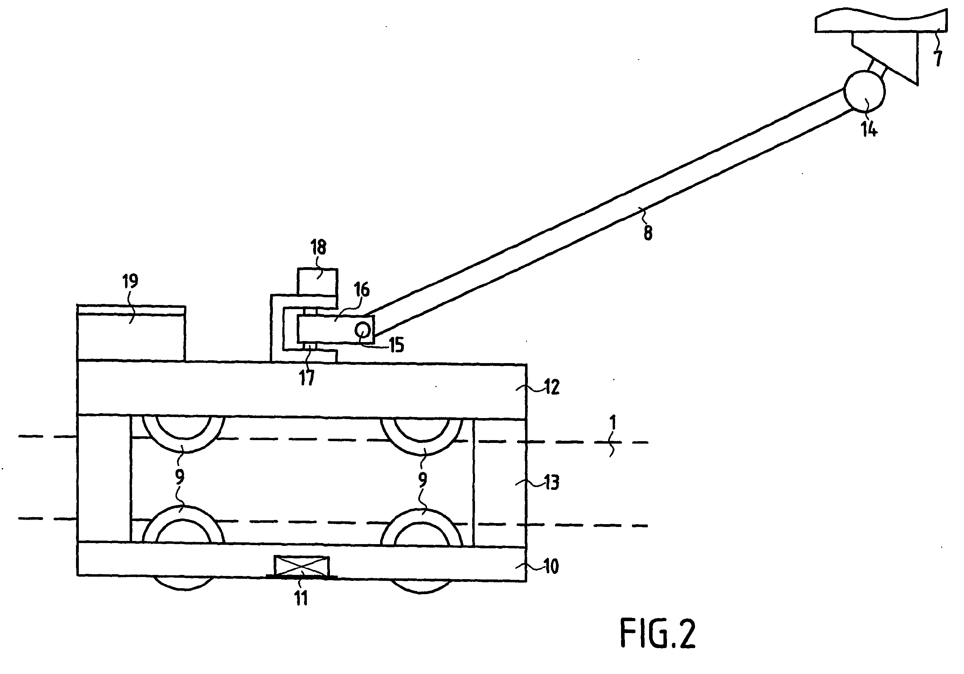

Un ou des chariots en aluminium (figure 2) tractés par le véhicule 7 au moyen d'un timon 8 sont guidés par la fente 1 de la goulotte au moyen de quatre galets 9 comportant un boudin central. L'emploi de quatre galets permet d'assurer avec un minimum de jeu, l'alignement horizontal et vertical du chariot avec la fente 1 autorisant ainsi une faible largeur de celle-ci.

Le chariot en forme de cadre comporte :
- un longeron inférieur 10 supportant les capteurs de courant glissants 11 qui coopèrent avec les rails conducteurs 3 ;
- un longeron supérieur 12 ;
- deux traverses 13 qui relient le longeron inférieur 10 au longeron supérieur 12 au travers de la fente 1, cette fente 1 étant schématisée en tiretés dans la vue latérale de la figure 2.

Les galets 9 sont disposés entre les deux traverses 13 qui forment ainsi chasse-pierre et évitent le coincement entre les galets supérieurs 9 et les profilés 2 d'objets pouvant se trouver sur ceux-ci.

Le timon 8 est attelé coté véhicule 7 au moyen d'une rotule 14 et coté chariot, par un axe horizontal 15 à une chape 16 reliée au longeron supérieur 12 par un axe vertical 17 permettant un déplacement du véhicule par rapport au chariot dans les trois directions, limité par la seule longueur du timon.

Un capteur analogique ou numérique 18, placé sur l'axe vertical 17 de la chape 16 mesure les variations de l'angle que fait dans le plan horizontal le timon 8 avec le chariot, donc avec l'axe d'élancement de la fente 1. Le traitement de cette information par une commande électrique permet de diriger le véhicule selon l'axe de la fente 1 de la goulotte, cet angle devant être toujours sensiblement nul. Un dérapage, un sur ou un sous virage du véhicule seront détectés par le capteur par un angle anormalement élevé et cette information traitée par la commande, selon un programme préétabli, déclenchera une alarme, ralentira ou arrêtera le véhicule.

Une botte de raccordement 19, fixée sur le longeron supérieur 12, permet la connexion électrique avec le véhicule 7 via des câbles souples spiralés. La transmission de l'énergie électrique depuis les capteurs de courant glissants 11 à la boîte de raccordement 19, se fait au moyen de conducteurs isolés plats logés à l'intérieur des traverses 13.

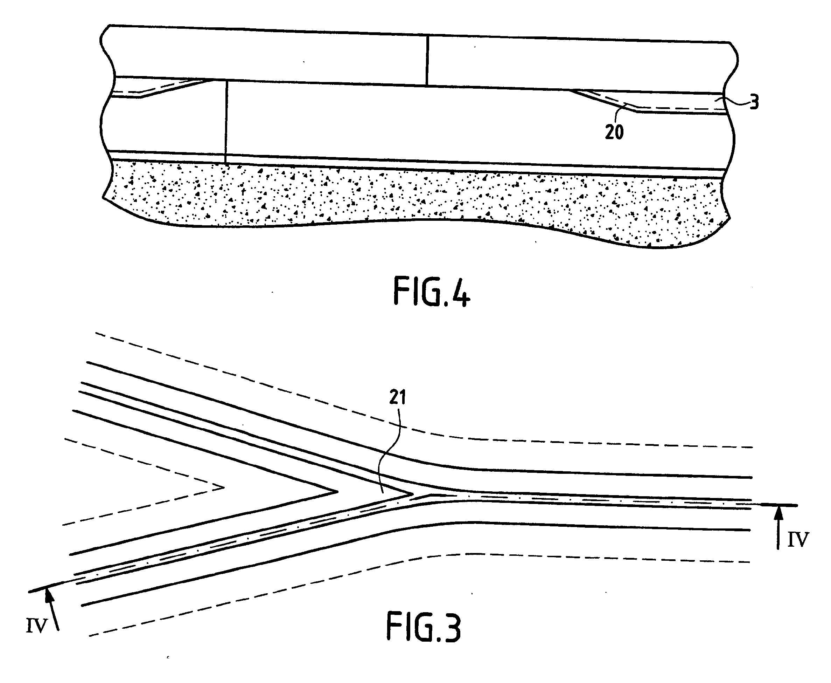

La réalisation d'aiguillage (figures 3 et 4) est obtenue par une bifurcation de la goulotte, le ou les rails conducteurs 3 étant interrompus à ce niveau. Une conformation en biseau 20 des extrémités des rails conducteurs 3 facilite le réengagement du ou des capteurs de courant glissants 11 après le franchissement de l'aiguillage. Une largeur des galets 9 égale à trois fois la largeur de la fente 1 empêche le déraillement des chariots à l'approche du coeur 21 de l'aiguillage, là où la largeur de la fente 1 est localement doublée. Pour que les chariots s'engagent dans la bonne direction, à l'approche de l'aiguillage, la commande reçoit l'ordre de désaxer le véhicule 7 par rapport à la goulotte du coté où l'on veut s'engager.

Le timon 8 formant un angle avec le chariot, la traction exercée par le timon va engager naturellement le chariot dans la bonne direction. Cet ordre peut être donné par le conducteur du véhicule ou automatiquement.

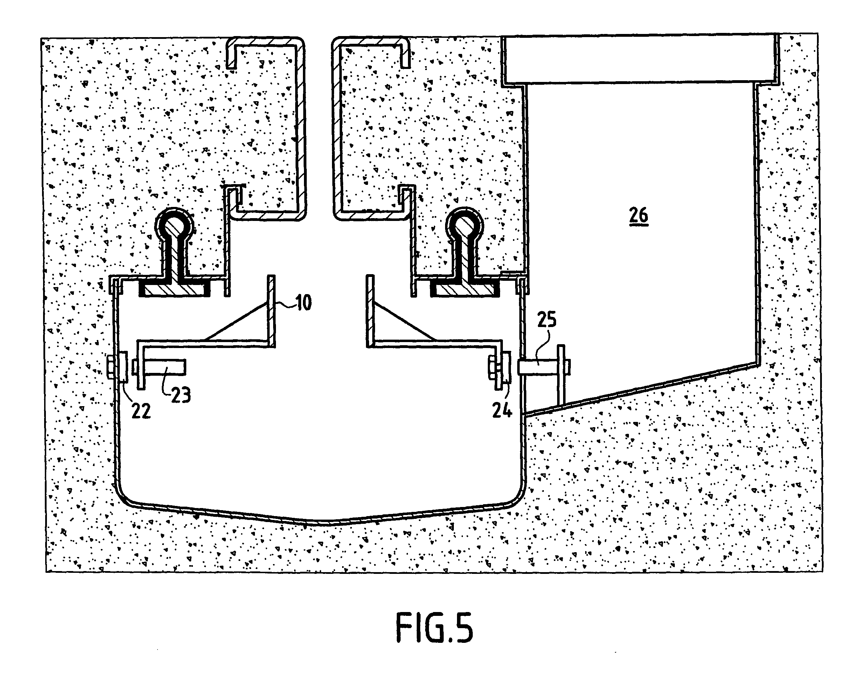

Des témoins en acier 22 fixés à l'intérieur de la goulotte (figure 5) en coopération avec un détecteur inductif 23 fixé sur le longeron inférieur 10 du chariot peuvent indiquer au système de commande du véhicule l'approche d'un aiguillage, d'un arrêt.

De même un témoin en acier 24 fixé sur le longeron inférieur 10 du chariot en coopération avec des détecteurs inductifs 25 fixés à l'intérieur de boîtiers 26 encastrés au sol contre la goulotte peut indiquer l'approche du véhicule pour déclencher par exemple la commande de feux tricolores. L'utilisation et la combinaison de séries de témoins de largeurs différentes permettent d'effectuer un codage.

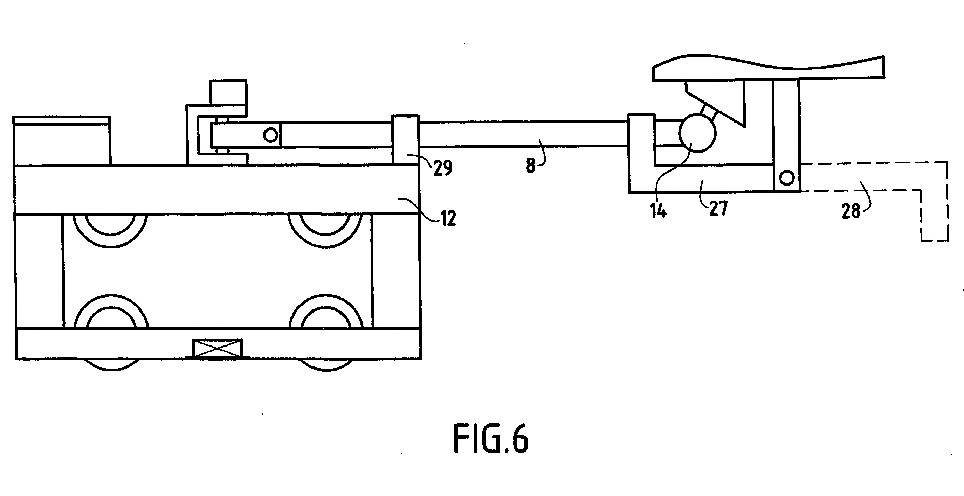

Le système peut être également équipé (figure 6) d'un bras de relevage pivotant motorisé 27 fixé sur le véhicule au niveau de la rotule 14. Lorsque le chariot est engagé dans la goulotte le bras est au repos dans la position 28. La goulotte étant aménagée en un point donné à cet effet, l'extrémité fourchue du bras 27 soulève le timon 8 par rotation du bras. Une deuxième fourche 29 fixée sur le longeron supérieur 12 du chariot permet d'immobiliser celui-ci en position repos.

Les matériaux et les dimensions cités sont donnés à titre d'exemple non limitatif et sont fonction de critères tels que la puissance électrique des véhicules, des contraintes mécaniques extérieures et de l'environnement.

## Revendications

1. Goulotte de guidage et d'alimentation électrique d'un véhicule (7) à galet (9), cette goulotte enterrée logeant au moins un rail conducteur (3), et comprenant deux profilés (2), en regard délimitant une fente (1) supérieure, ces profilés (2) formant surface de roulement pour un premier galet de véhicule, **caractérisé en ce que** les deux profilés (2) définissent une seconde surface de roulement pour un deuxième galet de véhicule, cette seconde surface étant interne à la goulotte et tournée vers sa paroi de fond (5).

2. Goulotte selon la revendication 1, **caractérisée en ce qu'**elle comprend deux rails conducteurs (3) supportés par des demi-couvercles (4) formant gaine isolante, la face inférieure (3b) des rails conducteurs (3) étant non isolée et tournée vers la paroi de fond (5) de goulotte.

3. Goulotte selon la revendication 1 ou 2, **caractérisée en ce que** les demi-couvercles (4) et la paroi de fond (5) sont en matériau polymère.

4. Goulotte selon l'une quelconque des revendications 1 à 3, **caractérisée en ce que** les profilés (2) délimitent la fente (1) d'une largeur maximum d'environ deux centimètres et d'une hauteur minimum d'environ quinze centimètres.

5. Goulotte selon l'une quelconque des revendications 1 à 4, **caractérisée en ce que** les profilés (2) sont de section en U et sont encastrés dans un liant hydraulique (6).

6. Dispositif de guidage et d'alimentation électrique au sol d'un véhicule par une goulotte telle que présentée dans les revendications 1 à 5, **caractérisé en ce que** ledit véhicule comprend un chariot portant au moins deux galets (9) à boudin central venant s'insérer dans la fente (1) en appui sur respectivement la première et la seconde surface de roulement définies par la goulotte.

7. Dispositif selon la revendication 6, **caractérisé en ce que** le chariot est en forme de cadre et comporte un longeron inférieur (10) supportant des capteurs de courant glissants (11) coopérant avec les rails conducteurs (3) de la goulotte.

8. Dispositif selon la revendication 6 ou 7, **caractérisé en ce que** le chariot comporte deux longerons (10,12) et deux traverses (13), quatre galets (9) étant disposés entre les traverses (13).

9. Dispositif selon l'une quelconque des revendications 6 à 8, **caractérisé en ce que** le chariot est apte à être attelé coté véhicule par une liaison rotule (14), un timon (8) reliant cette rotule (14) à un axe horizontal (15) d'une chape (16) du chariot, cette chape (16) étant reliée par un axe vertical (17) à un longeron supérieur (12) du chariot.

10. Dispositif selon la revendication 9, **caractérisé en ce qu'**un capteur d'angle (18) est placé sur l'axe vertical (17) de la chape (16) pour mesurer l'angle que fait le timon (8) avec l'axe de la fente de la goulotte.

11. Dispositif selon l'une quelconque des revendications 6 à 10, **caractérisé en ce que** la largeur des galets (9) est au moins égale à trois fois la largeur de la fente (1) de la goulotte

12. Dispositif selon l'une quelconque des revendications 6 à 11, **caractérisé en ce qu'**une boîte de raccordement (19) permet la connexion électrique du véhicule (7) sur lequel est attelé le chariot, les capteurs de courant glissants (11) étant reliés à la boite de raccordement (19) par des conducteurs logés dans l'ossature en profilés du chariot.

13. Véhicule de transport urbain, notamment tramway sur pneu ou APM, pourvu d'un dispositif de guidage et d'alimentation électrique tel que présenté dans l'une quelconque des revendications 9 à 11, **caractérisé en ce qu'**il comprend un bras de relevage motorisé (27) du timon (8).

14. Réseau de guidage et d'alimentation électrique de véhicule à galets, ce réseau comprenant des goulottes telles que présentées dans l'une quelconque des revendications 1 à 5, **caractérisé en ce que** des témoins (22) pour détecteurs inductifs (23) sont logés dans les goulottes et/ou des détecteurs inductifs (25) sont fixés à l'intérieur de boîtiers (26) encastrés contre les goulottes.

15. Réseau selon la revendication 14, **caractérisé en ce qu'**il comporte au moins un aiguillage dans lequel le ou les rails conducteurs (3) sont interrompus, les extrémités de ces rails conducteurs (3) étant conformées en biseau.

16. Procédé de commande du déplacement d'un véhicule à galet, ce véhicule étant pourvu d'un dispositif tel que présenté dans l'une quelconque des revendications 9 à 12, **caractérisé en ce qu'**il comprend une mesure de l'angle fait par le timon (8) avec le chariot, une détection d'une valeur de cet angle supérieure à un seuil déclenchant une alarme et/ou un ralentissement ou un arrêt du véhicule.

17. Procédé selon la revendication 16, **caractérisé en ce qu'**il comprend une étape de commande de désaxer le véhicule (7) par rapport au chariot, à l'approche d'un aiguillage.

18. Procédé selon la revendication 16 ou 17, **caractérisé en ce qu'**il comprend une étape de détection de l'approche du véhicule d'une zone définie du réseau des témoins (22) et détecteurs (25) internes à la goulotte coopérant respectivement avec des détecteurs et témoins placés sur le chariot.

## Claims

1. A trough for guiding and powering a roller (9) vehicle (7), said embedded trough housing at least one conductive rail (3), and comprising two profiles (2) opposite and delimiting a top slit (1), these profiles (2) forming a rolling surface for a first vehicle roller, **characterised in that** the two profiles (2) define a second rolling surface for a second vehicle roller, this second surface being internal to the trough and turned towards its back wall (5).

2. The trough as claimed in claim 1, **characterised in that** it comprises two conductive rails (3) supported by semi-covers (4) forming an insulating sheath, the lower face (3b) of the conductive rails (3) being non-insulating and turned towards the back wall (5) of the trough.

3. The trough as claimed in claim 1 or 2, **characterised in that** the semi-covers (4) and the back wall (5) are made of polymer material.

4. The trough as claimed in any one of claims 1 to 3, **characterised in that** the profiles (2) delimit the slit (1) having a maximum width of around two centimetres and a minimum height of around fifteen centimetres.

5. The trough as claimed in any one of claims 1 to 4, **characterised in that** the profiles (2) are in a U-section and are embedded in a hydraulic binder (6).

6. A device for guiding and powering of a vehicle by a trough in the ground such as shown in claims 1 to 5, **characterised in that** said vehicle comprises a carriage bearing at least two rollers (9) with a central flange inserted in the slit (1) supported on respectively the first and the second rolling surface defined by the trough.

7. The device as claimed in claim 6, **characterised in that** the carriage is in the form of a frame and comprises a lower beam (10) supporting sliding current sensors (11) cooperating with the conductive rails (3) of the trough.

8. The device as claimed in claim 6 or 7, **characterised in that** the carriage comprises two beams (10, 12) and two cross-beams (13), with four rollers (9) being arranged between the cross-beams (13).

9. The device as claimed in any one of claims 6 to 8, **characterised in that** the carriage is suitable to be coupled on the vehicle side by a ball joint link (14), a tongue (8) connecting this ball joint (14) to a horizontal axis (15) of a capping (16) of the carriage, this capping (16) being connected by a vertical axis (17) to an upper beam (12) of the carriage.

10. The device as claimed in claim 9, **characterised in that** an angle sensor (18) is placed on the vertical axis (17) of the capping (16) for measuring the angle made by the tongue (8) with the axis of the slit of the trough.

11. The device as claimed in any one of claims 6 to 10, **characterised in that** the width of the rollers (9) is at least equal to three times the width of the slit (1) of the trough

12. The device as claimed in any one of claims 6 to 11, **characterised in that** a junction box (19) enables powered connection of the vehicle (7) on which the carriage is coupled, the sliding current sensors (11) being connected to the junction box (19) by conductors housed in the framework in profiles of the carriage.

13. An urban transport vehicle, especially a tramway on tyres or APM, provided with a device for guiding and powering, such as shown in any one of Claims 9 to 11, **characterised in that** it comprises a motorised lifting arm (27) of the tongue (8).

14. A network for guiding and powering a roller vehicle, said network comprising troughs such as shown in any one of claims 1 to 5, **characterised in that** monitors (22) for inductive detectors (23) are housed in the troughs and/or inductive detectors (25) are fixed inside boxes (26) embedded against the troughs.

15. The network as claimed in claim 14, **characterised in that** it comprises at least one switch point in which the conductive rails (3) are interrupted, the ends of said conductive rails (3) being tapered.

16. A control process for moving a roller vehicle, said vehicle being provided with a device such as illustrated in any one of claims 9 to 12, **characterised in that** it comprises measuring the angle made by the tongue (8) with the carriage, detecting the value of this angle greater than a threshold triggering an alarm and/or slowing down or stopping of the vehicle.

17. The process as claimed in claim 16, **characterised in that** it comprises a control step for taking vehicle (7) off centre relative to the carriage, on approach of a switch point.

18. The process as claimed in claim 16 or 17, **characterised in that** it comprises a step for detecting the approach of the vehicle from a defined zone of the network of monitors (22) and detectors (25) internal to the trough cooperating respectively with detectors and monitors placed on the carriage.

## Patentansprüche

1. Rinne zur Führung und Stromversorgung eines Fahrzeuges (7) mit einer Rolle (9), wobei die eingegrabene Rinne wenigstens eine Stromschiene (3) behaust und zwei Profile (2) umfaßt, welche sich gegenüberstehend einen oberen Schlitz (1) begrenzen, wobei diese Profile (2) eine Rolloberfläche für eine erste Fahrzeugrolle bilden, **dadurch gekennzeichnet, daß** die beiden Profile (2) eine zweite Rolloberfläche für eine zweite Fahrzeugrolle bilden, wobei diese zweite Oberfläche intern in der Rinne gebildet und zu ihrer Bodenwand (5) gewandt ist.

2. Rinne nach Anspruch 1, **dadurch gekennzeichnet, daß** sie zwei Stromschienen (3) umfaßt, die durch Halbdeckel (4) gestützt sind, welche einen Isoliermantel bilden, wobei die Innenseite (3b) der Stromschienen (3) nicht isoliert und zur Bodenwand (5) einer Rinne gewandt ist.

3. Rinne nach Anspruch 1 oder 2, **dadurch gekennzeichnet, daß** die Halbdeckel (4) und die Bodenwand (5) aus Polymermaterial sind.

4. Rinne nach einem der Ansprüche 1 bis 3, **dadurch gekennzeichnet, daß** die Profile (2) den Schlitz (1) auf eine Maximalbreite von etwa 2 cm und eine Minimalhöhe von etwa 15 cm begrenzen.

5. Rinne nach einem der Ansprüche 1 bis 4, **dadurch gekennzeichnet, daß** die Profile (2) einen U-Querschnitt besitzt und in einem hydraulischen Bindemittel (6) eingelassen sind.

6. Vorrichtung zur Führung und Stromersorgung am Boden eines Fahrzeugs durch eine Rinne wie in den Ansprüchen 1 bis 5 angegeben, **dadurch gekennzeichnet, daß** das Fahrzeug einen Wagen umfaßt, der wenigstens zwei Rollen (9) mit zentralem Spurkranz trägt, der sich in den Schlitz (1) in Abstützung auf jeweils der ersten und der zweiten Rolloberfläche, die durch die Rinne definiert werden, einfügen wird.

7. Vorrichtung nach Anspruch 6, **dadurch gekennzeichnet, daß** der Wagen eine Rahmenform besitzt und einen unteren Längsträger (10) aufweist, der Stromschleifersensoren (11) trägt, die mit den Stromschienen (3) der Rinne zusammenwirken.

8. Vorrichtung nach Anspruch 6 oder 7, **dadurch gekennzeichnet, daß** der Wagen zwei Längsträger (10, 12) und zwei Querträger (13) umfaßt, wobei vier Rollen (9) zwischen den Querträgern (13) angeordnet sind.

9. Vorrichtung nach einem der Ansprüche 6 bis 8, **dadurch gekennzeichnet, daß** der Wagen geeignet ist, fahrzeugseitig durch eine Kupplungsverbindung (14) angehängt zu werden, wobei eine Deichsel (8) diese Kupplung (14) mit einer Horizontalachse (15) eines Gabelkopfs (16) des Wagens verbindet, wobei der Gabelkopf (16) durch eine vertikale Achse (17) mit einem oberen Längsträger (12) des Wagens verbunden ist.

10. Vorrichtung nach Anspruch 9, **dadurch gekennzeichnet, daß** ein Winkelsensor (18) auf der Vertikalachse (17) des Gabelkopfs (16) angeordnet ist, um den Winkel, der die Deichsel (8) bildet, mit der Achse des Schlitzes der Rinne zu messen.

11. Vorrichtung nach einem der Ansprüche 6 bis 10, **dadurch gekennzeichnet, daß** die Breite der Rollen (9) wenigstens gleich dem Dreifachen der Breite des Schlitzes (1) der Rinne ist.

12. Vorrichtung nach einem der Ansprüche 6 bis 11, **dadurch gekennzeichnet, daß** ein Verbindungskasten (19) die elektrische Verbindung des Fahrzeugs (7) erlaubt, an das der Wagen angehängt ist, wobei die Stromschleifersensoren (11) mit dem Verbindungskasten (9) durch Leiter verbunden sind, die in der Profilkonstruktion des Wagens eingerichtet sind.

13. Städtisches Transportfahrzeug, insbesondere Straßenbahn auf Reifen oder APM (Automated People Mover), versehen mit einer Vorrichtung zur Führung und Stromversorgung wie gezeigt in einem der Ansprüche 9 bis 11, **dadurch gekennzeichnet, daß** es einen motorisierten Hebearm (27) der Deichsel (8) hat.

14. Netzwerk zur Führung und Stromversorgung eines Fahrzeuges mit Rollen, wobei dieses Netzwerk Rinnen wie in einem der Ansprüche 1 bis 5 gezeigt umfaßt, **dadurch gekennzeichnet, daß** Anzeiger (22) für Induktivdetektoren (23) in den Rinnen eingerichtet sind und/oder induktive Detektoren (25) in Kästen (26) befestigt sind, die neben den Rinnen eingelassen sind.

15. Netzwerk nach Anspruch 14, **dadurch gekennzeichnet, daß** es wenigstens eine Weiche umfaßt, in der die Stromschienen (3) unterbrochen sind, wobei die Enden der Stromschienen (3) in einer Fase ausgebildet sind.

16. Verfahren zur Steuerung der Bewegung eines Fahrzeugs mit Rollen, wobei dieses Fahrzeug mit einer Vorrichtung wie in einem der Ansprüche 9 bis 12 gezeigt versehen ist, **dadurch gekennzeichnet, daß** es eine Messung des durch die Deichsel (8) mit dem Wagen gebildeten Winkels mißt, wobei eine Detektion eines Wertes dieses Winkels oberhalb einer Schwelle einen Alarm und/oder eine Verlangsamung oder einen Stopp des Fahrzeugs auslöst.

17. Verfahren nach Anspruch 16, **dadurch gekennzeichnet, daß** es einen Schritt zur Versatzsteuerung des Fahrzeugs (7) im Verhältnis zum Wagen bei Annäherung an eine Weiche umfaßt.

18. Verfahren nach Anspruch 16 oder 17, **dadurch gekennzeichnet, daß** es einen Schritt zur Detektion des Annäherns des Fahrzeugs an einen vorbestimmten Bereich des Netzwerks der Anzeiger (22) und Detektoren (25) in der Rinne umfaßt, die jeweils mit den Detektoren und Anzeigern zusammenwirken, die an dem Wagen angeordnet sind.
